# EUROPEAN PATENT APPLICATION

(11) **EP 4 317 123 A1**
(43) Date of publication of application: **07.02.2024**
(21) Application number: 22781317.7
(22) Date of filing: 31.03.2022
(51) Int. Cl.: C07C 1/04, C07C 9/02, C10G 2/00, C01B 3/38, C07B 61/00, C10L 3/12

(54) **USEFUL-HYDROCARBON PRODUCTION METHOD AND USEFUL-HYDROCARBON PRODUCTION DEVICE**

(30) Priority: 31.03.2021 JP 2021060916
(71) Applicant: FURUKAWA ELECTRIC CO., LTD., Tokyo 100-8322 (JP)
(72) Inventor: KAWAMATA Yuki, Tokyo 100-8322 (JP); FUJIKAWA Takashi, Tokyo 100-8322 (JP); FUKUSHIMA Masayuki, Tokyo 100-8322 (JP); BANBA Yuichiro, Tokyo 100-8322 (JP); MORI Tomohiko, Tokyo 100-8322 (JP); IWANO Yuki, Tokyo 100-8322 (JP)
(74) Representative: Papula Oy
(86) International application number: PCT/JP2022/016915
(87) International publication number: WO 2022/211109

(57) **Abstract**

Provided are a useful hydrocarbon production method and a useful hydrocarbon production device using methane-containing hydrocarbon and carbon dioxide which are easily obtainable source materials and can efficient produce over a long period. The present invention provides a useful hydrocarbon production method including: a dry reforming step for generating a first gas containing carbon monoxide and hydrogen from a mixed gas containing a methane-containing hydrocarbon and carbon dioxide; a useful hydrocarbon generating step of generating a second gas containing a useful hydrocarbon from the carbon monoxide and the hydrogen in the first gas; and a recycling step of separating a carbon dioxide-containing gas from the second gas and supplying the carbon dioxide-containing gas to the dry reforming step.

## Description

### TECHNICAL FIELD

The present disclosure relates to a useful hydrocarbon production method and a useful hydrocarbon production device.

### BACKGROUND ART

Useful hydrocarbons such as various lower olefins and aromatic hydrocarbons which are basic chemical raw materials, various liquid fuels (gasoline or liquefied petroleum gas (LPG), aviation fuel, etc.) are hydrocarbons having a carbon number of 2 or higher, and are mainly produced from oil resources. However, in the production process of these hydrocarbons, the geopolitical risks are of concern due to the oil resources mainly being the source material. Furthermore, in a production process or a consumption process of these hydrocarbons, due to discharging an abundance of carbon dioxide, it is considered to be a problem also from the viewpoint of global warming. Therefore, the development of a clean process with resourcse not limited to the producing area, and in which the emission of carbon dioxide is smaller has been sought.

For example, liquefied petroleum gas has little emission of carbon dioxide, which is one cause of global warming, compared to crude oil and gasoline, and thus research to suppress global warming is actively being conducted. Patent Document 1 discloses a production method of liquefied petroleum gas including: a synthesis gas production step of producing synthesis gas from a carbon-containing raw material and at least one selected from the group consisting of water, oxygen and carbon dioxide; a lower paraffin production step of producing lower paraffin-containing gas containing a low-boiling point component from the synthesis gas; a separation step of separating the low-boiling point component from the lower paraffin-containing gas; and a recycle step of recycling the low-boiling point component to the synthesis gas production step. However, Patent Document 1 is using a natural resource such as natural gas, naphtha or coal as the carbonaceous source material that is the source material for producing liquefied petroleum gas.

In addition to this, renewable energy such as biogas power generation made by using organic waste such as livestock manure, sewer sludge, and solar power generation have attracted attention in recent years. However, with these technologies, since the obtained energy form is electricity, energy transport may be difficult dependent on the situation of power transmission capacity. Furthermore, the biogas power generation uses only methane gas among the methane gas and the carbon dioxide obtained from the organic waste. For this reason, the current situation in which carbon dioxide is not utilized is not preferable from the viewpoint of global warming.

In this way, natural resources do not exist inexhaustibly, and it is only possible to produce the natural resources in specific countries and areas. Furthermore, even with renewable energy, energy forms other than electricity are demanded from the viewpoint of energy storage and transport.

### CITATION LIST

### Patent Document

Patent Document 1: Japanese Unexamined Patent Application, Publication No.2006-143752

### DISCLOSURE OF THE INVENTION

### Problems to be Solved by the Invention

An object of the present disclosure is to provide a useful hydrocarbon production method and a useful hydrocarbon production device using methane-containing hydrocarbon and carbon dioxide which are easily obtainable source materials, and which can efficiently produce over a long period.

### Means for Solving the Problems

A useful hydrocarbon production method according to a first aspect of the present invention includes: a dry reforming step of generating a first gas containing carbon monoxide and hydrogen, from a mixed gas containing a methane-containing hydrocarbon and carbon dioxide; a useful hydrocarbon generating step of generating a second gas containing a useful hydrocarbon from the carbon monoxide and the hydrogen contained in the first gas; and a recycling step of separating a carbon dioxide-containing gas from the second gas, and supplying the carbon dioxide-containing gas to the dry reforming step.

According to a second aspect of the present invention, in the useful hydrocarbon production method as described in the first aspect, the recycling step adjusts a supplied amount of the carbon dioxide-containing gas supplied to the dry reforming step, in response to a ratio (M_{HC} / M_{CO2}) of total carbon mole number M_{HC} of hydrocarbons supplied to the dry reforming step relative to total carbon mole number M_{CO2} of carbon dioxide in the mixed gas and carbon dioxide in the carbon dioxide-containing gas supplied to the dry reforming step.

According to a third aspect of the present invention, in the useful hydrocarbon production method as described in the first or second aspect, CO₂ concentration in the carbon dioxide-containing gas is 50% or more.

According to a fourth aspect of the present invention, the useful hydrocarbon production method as described in any one of the first to third aspects further includes a hydrogen supplying step of separating hydrogen from the second gas and supplying hydrogen to the useful hydrocarbon generating step.

According to a fifth aspect of the present invention, in the useful hydrocarbon production method as described in the fourth aspect, the hydrogen supplying step adjusts a supplied amount of hydrogen to be supplied to the useful hydrocarbon generating step in response to a mole number M_{H} of hydrogen in the useful hydrocarbon generating step.

According to a sixth aspect of the present invention, the useful hydrocarbon production method as described in any one of the first to fifth aspects further includes an adjusting step of adjusting a mole ratio (M_{H}/M_{CO}) of mole number M_{H} of hydrogen relative to mole number M_{CO} of carbon monoxide contained in the first gas obtained in the dry reforming step.

According to a seventh aspect of the present invention, the useful hydrocarbon production method as described in any one of the first to sixth aspects further includes a combusting step of separating a substance containing carbon atoms from the second gas, and combusting the substance containing carbon atoms to generate carbon dioxide, in which the recycling step supplies the carbon dioxide-containing gas and carbon dioxide generated in the combusting step to the dry reforming step.

According to an eighth aspect of the present invention, in the useful hydrocarbon production method as described in any one of the first to seventh aspects, the useful hydrocarbon is at least one hydrocarbon selected from the group consisting of olefins, aromatic hydrocarbons, gasoline, liquefied petroleum gas and liquid hydrocarbons.

According to a ninth aspect of the present invention, in the useful hydrocarbon production method as described in any one of the first to eighth aspects, the useful hydrocarbon is liquefied petroleum gas.

According to a tenth aspect of the present invention, in the useful hydrocarbon production method as described in any one of the first to eighth aspects, the useful hydrocarbon is liquefied petroleum gas, and hydrocarbon having a carbon number other than 3 and 4 is contained in the carbon dioxide-containing gas.

According to an eleventh aspect of the present invention, in the useful hydrocarbon production method as described in any one of the first to eighth aspects, the useful hydrocarbon is olefin, and at least one of a hydrocarbon other than a target olefin and carbon monoxide is contained in the carbon dioxide-containing gas.

According to a twelfth aspect of the present invention, in the useful hydrocarbon production method as described in any one of the first to eighth aspects, the useful hydrocarbon is an aromatic hydrocarbon, and at least one of a hydrocarbon other than a target aromatic hydrocarbon and carbon monoxide is contained in the carbon dioxide-containing gas.

According to a thirteenth aspect of the present invention, in the useful hydrocarbon production method as described in any one of the first to eighth aspects, the useful hydrocarbon is gasoline, and at least one of a hydrocarbon other than gasoline and carbon monoxide is contained in the carbon dioxide-containing gas.

According to a fourteenth aspect of the present invention, in the useful hydrocarbon production method as described in any one of the first to eighth aspects, the useful hydrocarbon is a liquid hydrocarbon, and at least one of a hydrocarbon having a carbon number of 4 or less and carbon monoxide is contained in the carbon dioxide-containing gas.

A useful hydrocarbon production device according to a fifteenth aspect includes: a dry reforming unit which generates a first gas containing carbon monoxide and hydrogen from a mixed gas containing a methane-containing hydrocarbon and carbon dioxide; a useful hydrocarbon generating unit to which the first gas generated by the dry reforming unit is supplied, and which generates a second gas containing a useful hydrocarbon from the carbon monoxide and the hydrogen contained in the first gas; and a recycling unit which separates a carbon dioxide-containing gas from the second gas generated by the useful hydrocarbon generating unit and supplies the carbon dioxide-containing gas to the dry reforming unit.

A useful hydrocarbon production method according to a sixteenth aspect includes: a dry reforming step of generating a first gas containing carbon monoxide and hydrogen from a gas having methane/carbon dioxide mole ratio of 1 or more and 9 or less; a useful hydrocarbon generating step of generating a second gas containing a useful hydrocarbon from the carbon monoxide and the hydrogen contained in the first gas; and a recycling step of separating a carbon dioxide-containing gas from the second gas, and supplying the carbon dioxide-containing gas to the dry reforming step.

### Effects of the Invention

According to the present disclosure, it is possible to provide a useful hydrocarbon production method and a useful hydrocarbon production device using methane-containing hydrocarbon and carbon dioxide which are easily obtainable source materials, and which can efficiently produce a useful hydrocarbon over a long period.

### BRIEF DESCRIPTION OF THE DRAWINGS

FIG. 1 is a block diagram showing an example of a useful hydrocarbon production method according to an embodiment.
FIG. 2 is a schematic drawing showing an example of a useful hydrocarbon production device according to an embodiment.

### PREFERRED MODE FOR CARRYING OUT THE INVENTION

Hereinafter, an embodiment will be explained in detail while referencing the drawings.

The present inventors have focused on easily obtainable methane-containing hydrocarbons and carbon dioxide, as well as dry reforming which can generate carbon monoxide and hydrogen from these methane-containing hydrocarbons and carbon dioxide. Dry reforming generates carbon monoxide and hydrogen (synthesis gas), from an equal mole ratio (based on carbon) of methane-containing hydrocarbons and carbon dioxide. However, with dry reforming under condition that the amount of methane-containing hydrocarbon is larger than the amount of carbon dioxide (under condition of deficient in carbon dioxide), the degradation reaction (coking) of the catalyst used in dry reforming is considerable, and replacement of catalyst is necessary in a short period, and in the worst case, there is concern over the efficiency and safety being impaired such as blockage of the reaction equipment by coke.

In addition, the present inventors have focused on, when generating a gas containing the useful hydrocarbon (second gas) from carbon monoxide and hydrogen by a useful hydrocarbon generation step performed after the dry reforming step, carbon dioxide, which is an unreacted substance or by-product in the dry reforming step and the useful hydrocarbon generation step, will be contained in the second gas. Then, the present inventors found that it is possible to suppress the degradation reaction of catalyst during the dry reforming step, and to efficiently produce useful hydrocarbons over a long period, by supplying to the dry reforming step and reusing the carbon dioxide which is an impurity contained in the second gas. The present disclosure is based on such knowledge.

The useful hydrocarbon production method of the embodiment includes: a dry reforming step of generating a first gas containing carbon monoxide and hydrogen from a mixed gas containing a methane-containing hydrocarbon and carbon dioxide; a useful hydrocarbon generating step of generating a second gas containing a useful hydrocarbon from the carbon monoxide and the hydrogen contained in the first gas; and a recycling step of separating a carbon dioxide-containing gas from the second gas and supplying the carbon dioxide-containing gas to the dry reforming step.

The useful hydrocarbon production device of the embodiment includes: a dry reforming unit which generates a first gas containing carbon monoxide and hydrogen from a mixed gas containing a methane-containing hydrocarbon and carbon dioxide; a useful hydrocarbon generating unit to which the first gas generated by the dry reforming unit is supplied, and which generates a second gas containing a useful hydrocarbon from the carbon monoxide and the hydrogen contained in the first gas; and a recycling unit which separates a carbon dioxide-containing gas from the second gas generated by the useful hydrocarbon generating unit and supplies the carbon dioxide-containing gas to the dry reforming unit.

### (Useful Hydrocarbon Production Method)

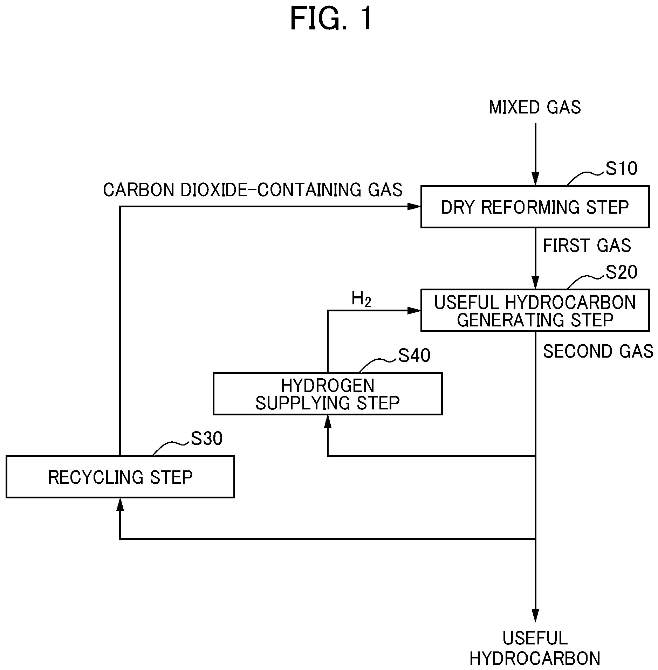

First, a useful hydrocarbon production method of the embodiment will be explained. FIG. 1 is a block diagram showing an example of the useful hydrocarbon production method of the embodiment.

As shown in FIG. 1, the useful hydrocarbon production method has a dry reforming step S10, a useful hydrocarbon generation step S20 and a recycling step S30.

In the dry reforming step S10, the first gas containing carbon monoxide and hydrogen is generated from a mixed gas containing a methane-containing hydrocarbon and carbon dioxide. The methane-containing hydrocarbon supplied to the dry reforming step S10 is constituted from methane and a hydrocarbon other than methane. The hydrocarbon other than methane contained in the methane-containing hydrocarbon is not particularly limited, and is for example a pure substance of a C2 to C10 hydrocarbon or a mixture thereof, and is preferably a C2 to C6 hydrocarbon, and is preferably ethane. At this time, the ratio of mole number of methane relative to mole number of C2 to C6 hydrocarbon (methane/ C2 to C6 hydrocarbon) is preferably 1 or more. When the mixed gas containing the above-mentioned such methane-containing hydrocarbon is supplied to the dry reforming step S10, the yield of the useful hydrocarbon improves.

In addition, the target useful hydrocarbon may be contained in a small amount in the hydrocarbon contained in the methane-containing hydrocarbon, and the amount of the useful hydrocarbon in the methane-containing hydrocarbon is less than the generated amount of the target useful hydrocarbon included in the second gas.

In the dry reforming step S10, carbon monoxide and hydrogen are synthesized from the methane and carbon dioxide contained in the mixed gas, by dry reforming as in the below Formula (1), for example. In addition, since the hydrocarbon serving as the raw material of the dry reforming is not limited to methane, generalizing Formula (1) to saturated hydrocarbons gives the below Formula (2). At this time, carbon dioxide and carbon contained in the hydrocarbon of the raw materials react in equal amounts.

CH₄+CO₂→2CO+2H₂ (1)

CₙH₂ₙ₊₂+nCO₂→2nCO+(n+1)H₂(n≧1) (2)

In the dry reforming step S10, a catalyst (hereinafter simply referred to as dry reforming catalyst) for synthesizing carbon monoxide and hydrogen from the methane-containing hydrocarbon and carbon dioxide contained in the mixed gas by dry reforming is used. In the dry reforming step S10, by heating the dry reforming catalyst while supplying the mixed gas to the dry reforming catalyst, the methane-containing hydrocarbon and carbon dioxide in the supplied mixed gas react over the dry reforming catalyst to generate the first gas containing carbon monoxide and hydrogen.

Although the dry reforming catalyst is not particularly limited, for example, from the viewpoint of exhibiting catalytic activity over a long period to generate carbon monoxide and hydrogen, it is preferable for the dry reforming catalyst to be a catalyst structure including a support of a porous structure constituted by a zeolite-type compound, and at least one catalytic material within the support, the support has intercommunicating passages, a ratio of the length dimension L to the thickness dimension d of the support (L/d ratio) is 5.0 or more, and the catalytic material is at least present in the passages of the support.

For such a catalyst structure, the L/d ratio of the support is 5.0 or more, preferably 5.0 or more and 35.0 or less, and more preferably 7.0 or more and 25.0 or less. If the L/d ratio of the support is 5.0 or more, it is possible to improve catalytic activity. In addition, if the L/d ratio is 35.0 or less, it is possible to improve production yield of the catalyst structure.

In addition, for such a catalyst structure, the average particle size of the catalytic material is preferably 1.00 nm or more and 13.00 nm or less. If the average particle size of the catalytic material is within the above range, the catalytic activity sufficiently increases, and it is possible to improve the catalytic activity as the average particle size becomes smaller. In addition, from the viewpoint of achieving both high catalytic activity and coking resistance, the average particle size of the catalytic material is preferably 9.00 nm or less, and more preferably 4.50 nm or less.

In addition, for the dry reforming catalyst, it is possible to use so long as being a catalyst which is well known as a dry reforming catalyst. For example, as disclosed in Yuche Gao et al.; "A review of recent developments in hydrogen production via biogas dry reforming, Energy Conversion and Management," 171 (2018), pp. 133 - 155, it is possible to contain at least one selected from Ir, Ru, Rh, Pt, Pd, Ni, Co and Fe, which are metals having activity in dry reforming, and to use a support containing at least one selected from MgO, Al₂O₃, SiO₂, CeO₂, CaO, ZrO₂, TiO₂, La₂O₃, ZnO, silicalite-1, MCM-41 and SBA-15 as the support. However, the dry reforming catalyst is not particularly limited to these.

The heating temperature of the dry reforming catalyst is appropriately set according to the type of the dry reforming catalyst, supplied amount of the mixed gas, content ratio of the methane-containing hydrocarbon and carbon dioxide contained in the mixed gas, etc. For example, regarding the heating temperature of the dry reforming catalyst, the lower limit value is preferably 400°C or more, more preferably 600°C or more, and the upper limit value is preferably 1000°C or less, and more preferably 900°C or less.

The first gas generated in the dry reforming step S10 contains at least the synthesis gas containing carbon monoxide and hydrogen. In addition to the carbon monoxide and hydrogen (synthesis gas), the first gas contains hydrocarbon and carbon dioxide which are remained substances, water which is a byproduct, etc.

The content ratio of carbon monoxide and hydrogen contained in the first gas can be appropriately set according to conditions of the dry reforming such as the heating temperature of the dry reforming catalyst, the supplied amount of the mixed gas, and the content ratio of the methane-containing hydrogen and carbon dioxide contained in the mixed gas.

In the useful hydrocarbon generating step S20 performed after the dry reforming step S10, the second gas containing the useful hydrocarbon is generated from the carbon monoxide and hydrogen in the first gas generated in the dry reforming step S10, as in the below Formula (3).

CO+2H₂→ hydrocarbon (3)

The second gas generated in the useful hydrocarbon generating step S20 contains at least the useful hydrocarbon. In addition to the useful hydrocarbon, the second gas contains hydrocarbons, carbon dioxide, carbon monoxide and hydrogen which are unreacted substances of the dry reforming step S10 and the useful hydrocarbon generating step S20, water and hydrocarbons other than the useful hydrocarbon which are byproducts of these steps, and the like.

In the recycling step S30 performed after the useful hydrocarbon generating step S20, the carbon dioxide-containing gas is separated from the second gas generated in the useful hydrocarbon generating step S20, and the carbon dioxide-containing gas is supplied to the dry reforming step S10.

As shown in the above Formulas (1) and (2), in the dry reforming step S10, carbon monoxide and hydrogen are generated from the methane-containing hydrocarbon and carbon dioxide of the same ratio (based on carbon) (1:1 by carbon mole ratio). On the other hand, as the ratio of the carbon dioxide to the methane-containing hydrocarbon in the mixed gas reduces, the coking of the dry reforming catalyst tends to occur, and as a result, the activity of the dry reforming catalyst declines, and the generated amount of useful hydrocarbon decreases.

Therefore, in the recycling step S30, by supplying the carbon dioxide-containing gas (so-called off gas) containing carbon dioxide, which is an impurity in the second gas generated in the useful hydrocarbon generating step S20, to the dry reforming step S10, the coking of the dry reforming catalyst caused by a decline in the proportion of carbon dioxide to the methane-containing hydrocarbon is able to suppress, and hence it is possible to suppress an activity decline in the dry reforming catalyst. For this reason, it is possible to efficiently produce the useful hydrocarbon over a long period. In addition, since the carbon dioxide discharged from the useful hydrocarbon generating step S20 is reused as the raw material of the dry reforming step S10, it is possible to suppress the global warming. When the carbon dioxide-containing gas includes hydrocarbons other than the useful hydrocarbon, the yield of useful hydrocarbon further improves.

In addition, the mixed gas supplied to the dry reforming step S10 may be a biogas. The biogas contains as main components a hydrocarbon including methane (methane-containing hydrocarbon) and carbon dioxide. The biogas is a renewable energy resource generated from an organic waste material such as the manure of livestock, food product residue, or woody waste, and is environmentally friendly. The biogas can be relatively easily generated or acquired compared to natural resources such as natural gas which can only be produced in specific regions.

In this way, the biogas is easily acquired compared to natural resources such as natural gas, in addition to being a renewable energy resource. For this reason, when using biogas as a raw material of the useful hydrocarbon production method, it is possible to stably acquire raw materials without causing a raw material shortage.

On the other hand, the ratio of carbon dioxide relative to the total amount of the methane-containing hydrocarbon and carbon dioxide contained in the biogas is usually about 40%, and the methane-containing hydrocarbon is more abundant than carbon dioxide. In this way, the biogas contains more methane-containing hydrocarbon than carbon dioxide. For this reason, when supplying biogas to the dry reforming step S10, carbon dioxide is insufficient, a part of the methane-containing hydrocarbon is unused, and as a result, the generated amount of the synthesis gas obtained in the dry reforming step S10 decreases. Furthermore, since the biogas contains more methane-containing hydrocarbon than carbon dioxide, the coking of the dry reforming catalyst tends to occur as mentioned above, and as a result, the activity of the dry reforming catalyst declines, and the generated amount of useful hydrocarbon decreases.

To address such concerns, since the recycling step S30 supplies the carbon dioxide-containing gas which is off gas to the dry reforming step S10, it is possible to compensate for the underdose of carbon dioxide in the biogas. In this way, even in the case of using biogas as a raw material, since it is possible to suppress the shortage of carbon dioxide derived from biogas in the dry reforming step S10 by the recycling step S30, it is possible to stably perform the dry reforming step S10 over a long period. Furthermore, since it is possible to suppress the coking of the dry reforming catalyst caused by a decline in the ratio of carbon dioxide to the methane-containing hydrocarbon, it is possible to suppress an activity decline of the dry reforming catalyst. For this reason, it is possible to efficiently produce the useful hydrocarbon over a long period.

In addition, the recycling step S30 preferably adjusts the supplied amount of the carbon dioxide-containing gas supplied to the dry reforming step S10, in response to the ratio (M_{HC}/M_{CO2}) of total carbon mole number M_{HC} of hydrocarbons supplied to the dry reforming step S10 relative to the total carbon mole number M_{CO2} of carbon dioxide in the mixed gas and carbon dioxide in the carbon dioxide-containing gas supplied to the dry reforming step S10. The hydrocarbons supplied to the dry reforming step S10 are hydrocarbons contained in the methane-containing hydrocarbon in the mixed gas and contained in the carbon dioxide-containing gas.

In the dry reforming step S10, there is a possibility of causing the coking of the dry reforming catalyst and a carbon dioxide shortage under a condition of the methane-containing hydrocarbon being more than a predetermined amount. For this reason, the recycling step S30 can suppress the coking and the carbon dioxide shortage in the dry reforming step S10, if increasing the supplied amount of the carbon dioxide-containing gas supplied to the dry reforming step S10 when the above-mentioned ratio (M_{HC}/M_{CO2}) in the dry reforming step S10 is extremely large. In this way, by adjusting the supplied amount of the carbon dioxide-containing gas supplied to the dry reforming step S10 in response to the above ratio (M_{HC}/M_{CO2}) in the dry reforming step S10, it is possible to further suppress the coking and the carbon dioxide shortage in the dry reforming step S10.

In addition, biogas is generated from various types of the organic waste material. For this reason, the biogas differs in the ratio of the methane-containing hydrocarbon and carbon dioxide contained in the biogas according to the type of the organic waste material. Even in the case of supplying the biogas to the dry reforming step S10, the supplied amount of the carbon dioxide-containing gas supplied to the dry reforming step S10 is adjusted by the recycling step S30 in response to the above-mentioned ratio (M_{HC}/M_{CO2}) in the dry reforming step S10. For this reason, even if the content ratio of the methane-containing hydrocarbon and carbon dioxide in the biogas differs, it is possible to further suppress the coking and the carbon dioxide shortage in the dry reforming step S10.

When adjusting the supplied amount of the carbon dioxide-containing gas supplied to the dry reforming step S10 and controlling the above-mentioned ratio (M_{HC}/M_{CO2}) in the dry reforming step S10 to preferably 1.30 or less, and more preferably 1.00 or less, it is possible to further improve the above-mentioned effects.

In addition, the CO₂ concentration of the carbon dioxide-containing gas supplied to the dry reforming step S10 by the recycling step S30 is preferably 50% or more, more preferably 60% or more, and even more preferably 70% or more. If the CO₂ concentration of the carbon dioxide-containing gas is 50% or more, by regulating the supplied amount of the recycled gas in the recycling step S30, it is possible to sufficiently suppress the coking and the carbon dioxide shortage in the dry reforming step S10.

In addition, the useful hydrocarbon production method of the embodiment may further include a mixed gas generating step, which is not shown in Fig. 1. The mixed gas generating step generates the mixed gas containing the methane-containing hydrocarbon and carbon dioxide and supplies the mixed gas to the dry reforming step S10. The mixed gas generating step preferably performs a pyrolysis treatment with biomass resource including woody biomass or waste plastic as the raw material, or a gasification process which oxidatively decomposes these raw materials by adding an oxidant (H₂O, oxygen, carbon dioxide).

In the pyrolysis treatment or the gasification process, a gas containing at least carbon monoxide and hydrogen generates, and hydrocarbons and carbon dioxide also generate as impurities. These hydrocarbons and carbon dioxide can be supplied from the mixed gas generating step to the dry reforming step S10.

At this time, the useful hydrocarbon production method of the embodiment may include a separating step of separating carbon monoxide and hydrogen from the gas containing hydrocarbons and carbon dioxide provided between the mixed gas generating step and the dry reforming step S10.

Depending on the type of raw materials of the pyrolysis treatment or the gasification process, the mixing ratio of the raw materials, reaction temperature, etc., the carbon ratio of hydrocarbon and carbon dioxide varies

In the case of the hydrocarbon being greater than a defined amount in the dry reforming step S10 (carbon dioxide shortage), by supplying the carbon dioxide-containing gas containing carbon dioxide which is an impurity in the second gas generated in the useful hydrocarbon generating step S20 to the dry reforming step S10, the recycling step S30 can be suppressed an activity decline of the dry reforming catalyst due to suppressing the coking of the dry reforming catalyst caused by a decline in the ratio of carbon dioxide to hydrocarbon. For this reason, it is possible to efficiently produce the target useful hydrocarbon over a long period. In addition, since the carbon dioxide discharged from the useful hydrocarbon generating step S20 is reused as the raw material of the dry reforming step S10, it is possible to suppress global warming.

In addition, trace amounts of sulfur and/or halogens may mix as impurities in the gas generated by the pyrolysis treatment or the gasification process. These substances become poisonous substances to the dry reforming catalyst used in the dry reforming step S10 and the useful hydrocarbon generation catalyst used in the useful hydrocarbon generating step S20; therefore, there is possibility of impairing the catalyst performance, and becoming a cause for damage to equipment at the same time. Therefore, it is possible to appropriately provide a desulfurization step or dehalogenation step as a pretreatment step for the above-mentioned generated gas between the mixed gas generating step and the dry reforming step S10.

In addition, the useful hydrocarbon production method of the embodiment preferably further includes a hydrogen supplying step S40 of separating hydrogen from the second gas generated in the useful hydrocarbon generating step S20 and supplying hydrogen to the useful hydrocarbon generating step S20.

As shown in the above Formula (3), twice the amount of hydrogen relative to carbon monoxide is required in the useful hydrocarbon generating step S20. On the other hand, the proportions of carbon monoxide and hydrogen in the first gas generated in the dry reforming step S10 are equal as shown in the above Formula (1) or (2). In this way, since the same proportions of carbon monoxide and hydrogen are generated in the dry reforming step S10 and twice the amount of hydrogen than carbon monoxide is required in the useful hydrocarbon generating step S20, when performing the useful hydrocarbon generating step S20 over a long period, it leads to a hydrogen shortage. As a result thereof, since the carbon monoxide is excess, the generated amount of the useful hydrocarbon obtained in the useful hydrocarbon generating step S20 declines.

Therefore, in the hydrogen supplying step S40, by supplying hydrogen (so-called off gas) which is an impurity in the second gas generated in the useful hydrocarbon generating step S20, it is possible to compensate for the underdose of hydrogen which is a raw material of the useful hydrocarbon generating step S20. In this way, since it is possible to suppress a hydrogen shortage derived from the useful hydrocarbon generating step S20 over a long period by the hydrogen supplying step S40, it is possible to stably perform the useful hydrocarbon generating step S20 over a long period. For this reason, it is possible to efficiently produce a useful hydrocarbon that is easy to store and transport over a long period. In addition, since the hydrogen discharged from the useful hydrocarbon generating step S20 is reused as a raw material of the useful hydrocarbon generating step S20, it is possible to reduce the environmental burden.

In addition, the hydrogen supplying step S40 preferably adjusts the supplied amount of hydrogen supplied to the useful hydrocarbon generating step S20 in response to the mole number M_{H} of hydrogen in the useful hydrocarbon generating step S20, more preferably adjusts the supplied amount of hydrogen to be supplied to the useful hydrocarbon generating step S20 in response to the above-mentioned mole number M_{H} as well as the type of the useful hydrocarbon and the reaction for producing the useful hydrocarbon.

In the case of producing liquefied petroleum gas as the useful hydrocarbon, for example, if the mole number M_{H} of hydrogen in the useful hydrocarbon generating step S20 is large, the useful hydrocarbon synthesis reaction can be favorably carried out. On the other hand, if the mole number M_{H} of hydrogen in the hydrocarbon generating step S20 is small, there is a possibility of causing the hydrogen shortage in the useful hydrocarbon synthesis reaction. For this reason, if the hydrogen supplying step S40 increases the supplied amount of hydrogen supplied to the useful hydrocarbon generating step 20 when the mole number M_{H} of hydrogen in the useful hydrocarbon generating step S20 is small, it is possible to suppress the hydrogen shortage in the useful hydrocarbon generating step S20.

In this way, in the hydrogen supplying step S40, when the mole number M_{H} of hydrogen in the useful hydrocarbon generating step S20 is small, by adjusting the supplied amount of hydrogen supplied to the useful hydrocarbon generating step S20 in response to the mole number M_{H} of hydrogen in the useful hydrocarbon generating step S20, such as increasing the supplied amount of hydrogen supplied to the useful hydrocarbon generating step S20, it is possible to more efficiently produce the target useful hydrocarbon.

In addition, the hydrogen supplying step S40 preferably adjusts the supplied amount of hydrogen supplied to the useful hydrocarbon generating step S20 in response to the mole ratio (M_{H}/M_{CO}) of the mole number M_{H} of hydrogen relative to the mole number M_{CO} of carbon monoxide in the useful hydrocarbon generating step S20.

Regarding the mole ratio (M_{H}/M_{CO}) of the useful hydrocarbon generating step S20, when the ratio of hydrogen relative to the carbon monoxide is extremely small, there is a possibility of leading to the hydrogen shortage. For this reason, if the hydrogen supplying step S40 increases the supplied amount of hydrogen supplied to the useful hydrocarbon generating step S20 when the mole ratio (M_{H}/M_{CO}) in the useful hydrocarbon generating step S20 is extremely small, it is possible to suppress the hydrogen shortage in the useful hydrocarbon generating step S20. In this way, in response to the mole ratio (M_{H}/M_{CO}) in the useful hydrocarbon generating step S20, by adjusting the supplied amount of hydrogen supplied to the useful hydrocarbon generating step S20, it is possible to more reliably suppress the hydrogen shortage in the useful hydrocarbon generating step S20.

In addition, the useful hydrocarbon production method of the embodiment may further include an adjusting step (not shown Fig. 1) of adjusting the mole ratio (M_{H}/M_{CO}) of the mole number M_{H} of hydrogen relative to the mole number M_{CO} of carbon monoxide contained in the first gas obtained in the dry reforming step S10. The adjusting step can be performed prior to the dry reforming step S10.

The adjusting step adjusts the mole ratio (M_{H}/M_{CO}) in the first gas obtained in the dry reforming step S10. The adjusting step is preferably performed prior to the dry reforming step S10 to adjust the mole ratio (M_{H}/M_{CO}) in the first gas. In the adjusting step, the mole ratio (M_{H}/M_{CO}) in the first gas is adjusted in response to the conditions of the reaction producing the useful hydrocarbon realized by the useful hydrocarbon generating step S20.

If the first gas having adjusted the mole ratio (M_{H}/M_{CO}) by the adjusting step is supplied to the useful hydrocarbon generating step S20, since it is possible to suppress the hydrogen shortage derived from the useful hydrocarbon generating step S20 over a long period, it is possible to stably perform the useful hydrocarbon generating step S20 over a long period. For this reason, it is possible to efficiently produce the target useful hydrocarbon over a long period.

In addition, the useful hydrocarbon production method of the embodiment may further include a combusting step (not shown in Fig. 1) of separating a substance containing carbon atoms from the second gas, and combusting the substance containing carbon atoms to generate carbon dioxide. In this case, the recycling step S30 supplies the carbon dioxide-containing gas and carbon dioxide generated by the combusting step to the dry reforming step S10.

For example, in the case of producing liquefied petroleum gas as the useful hydrocarbon, in addition to the liquefied petroleum gas, the substance containing carbon atoms such as methane, carbon dioxide, carbon monoxide methanol, dimethyl ether, C1 to C2 hydrocarbons, and C5 and higher hydrocarbons that are impurities is included in the second gas discharged from the useful hydrocarbon generating step S20. In the combusting step, the substance containing carbon atoms contained in the second gas discharged from the useful hydrocarbon generating step S20 are separated from the second gas, and the separated substance containing carbon atoms is combusted to generate carbon dioxide.

The substance containing carbon atoms combusted in the combusting step include at least one type of substance selected from the group consisting of methane, carbon monoxide, methanol, dimethyl ether and hydrocarbons other than the target useful hydrocarbon. It should be noted that carbon dioxide may or may not be included in the substance containing carbon atoms to be combusted in the combusting step.

The recycling step S30 supplies the carbon dioxide generated in the combusting step in addition to the carbon dioxide-containing gas separated from the second gas generated in the useful hydrocarbon generating step S20 to the dry reforming step S10. The amount of carbon dioxide supplied to the dry reforming step S10 can be increased by the combusting step. For this reason, since the coking and the carbon dioxide shortage in the dry reforming step S10 can be further suppressed, it is possible to efficiently produce the target useful hydrocarbon over a long period. In addition, the heat generated in the combusting step can be recovered and used in the dry reforming step S10 or the useful hydrocarbon generating step S20.

In addition, it is preferable to adjust the combustion rate of the combusting step in response to the proportions of lower hydrocarbon among the hydrocarbons and carbon dioxide supplied to the dry reforming step S10. The combustion rate of the combusting step is the proportion of combusting hydrocarbons excluding the target useful hydrocarbon component in the second gas and converting to carbon dioxide as in the below Formula (4), and can be calculated from the following formula. For example, in the case of the combustion rate of the combusting step being 100%, the combusting step combusts all of the hydrocarbons excluding the target useful hydrocarbon component in the second gas to generate carbon dioxide.

2CₙH₂ₙ₊₂+(3n+1)O₂→(2n+2)H₂O+2nCO₂ (4)

Combustion rate (%) = 100 - (total hydrocarbon amount (C-mol) excluding target useful hydrocarbon component combusted in combusting step x 100 / total hydrocarbon amount (C-mol) excluding target useful hydrocarbon component in second gas)

In this way, it is possible to adjust the amount of carbon dioxide generated in the combusting step by changing the combustion rate in the combusting step. For this reason, it is possible to adjust the combustion rate of the combusting step to adjust the generated amount of carbon dioxide in response to the proportion of lower hydrocarbon to carbon dioxide supplied to the dry reforming step S10, and to adjust the amount of carbon dioxide supplied to the dry reforming step S10 by the recycling step S30; therefore, it is possible to increase the generated amount of the target useful hydrocarbon.

For example, in the case of producing liquefied petroleum gas in the useful hydrocarbon generating step S20, if the combustion rate of the combusting step is 3% or more, it is possible to sufficiently suppress the carbon dioxide shortage in the dry reforming step S10. In addition, if the combustion rate of the combusting step is 50% or less, the ratio of lower hydrocarbons to carbon dioxide supplied to the dry reforming step S10 is favorable. For this reason, if the combustion rate of the combusting step is 3% or more and 50% or less, it is possible to efficiently produce the useful hydrocarbon over a long period.

In addition, in the case of supplying biogas to the dry reforming step S10, the useful hydrocarbon production method of the embodiment may include a desulfurization step (not shown in Fig. 1) of desulfurizing the biogas. The desulfurization step can be performed prior to the dry reforming step S10. The sulfur components such of sulfur compounds, etc. such hydrogen sulfide are included in the biogas. The sulfur components in the biogas decrease the catalyst performance of the dry reforming catalyst used in the dry reforming step S10 and the useful hydrocarbon generation catalyst used in the useful hydrocarbon generating step S20. By desulfurizing the biogas in the desulfurization step, it is possible to suppress a decline in the catalyst performance of the dry reforming catalyst and the useful hydrocarbon generation catalyst. For this reason, it is possible to stably produce the target useful hydrocarbon over a long period.

In addition, the useful hydrocarbon production method of the embodiment may include a dewatering step (not shown in Fig. 1) of dewatering the first gas generated in the dry reforming step S10. The dewatering step can be performed after the dry reforming step S10 and prior to the useful hydrocarbon generating step S20. Water may be contained in the first gas supplied to the useful hydrocarbon generating step S20. By dewatering the first gas in the dewatering step, it is possible to improve the efficiency of the synthesis reaction of the useful hydrocarbon performed in the useful hydrocarbon generating step S20, and further possible to suppress a decline in the catalyst performance of the useful hydrocarbon generation catalyst due to moisture.

In addition, the useful hydrocarbon production method of the embodiment may include a compressing step (not shown) of compressing the first gas generated in the dry reforming step S10. The compressing step can be performed after the dry reforming step S10 and prior to the useful hydrocarbon generating step S20. By compressing the first gas in the compressing step, since the compressed first gas is supplied to the generating step S20, it is possible to improve the efficiency of the synthesis reaction of the useful hydrocarbon performed in the useful hydrocarbon generating step S20.

In addition, the useful hydrocarbon produced in the useful hydrocarbon production method is preferably at least one hydrocarbon selected from the group consisting of olefins, aromatic hydrocarbons, gasoline, liquefied petroleum gas and liquid hydrocarbon, and is more preferably liquefied petroleum gas.

As the olefins, ethylene and propylene are preferred. As the aromatic hydrocarbons, benzene, toluene and xylene are preferred. As the gasoline, C5 to C12 hydrocarbons are preferred. As the liquefied petroleum gas, C3 to C4 hydrocarbons are preferred. As the liquid hydrocarbons, naphtha, kerosine, jet fuel, diesel oil and heavy oil which are C5 or higher hydrocarbons are preferred.

According to the type of the useful hydrocarbon to be produced by the useful hydrocarbon production method, it is possible to synthesize a hydrocarbon mixture with various target useful hydrocarbons as main components from carbon monoxide and hydrogen by various useful hydrocarbon synthesis reactions, under the appropriate catalyst and reaction conditions in the useful hydrocarbon generating step S20.

For example, in the case of producing olefins as the useful hydrocarbon, an olefin synthesis reaction is performed using the useful hydrocarbon generation catalyst (olefin generation catalyst) for synthesizing olefins from the carbon monoxide and hydrogen contained in the first gas in the useful hydrocarbon generating step S20. In the useful hydrocarbon generating step S20, by heating the olefin generation catalyst while supplying the first gas to the olefin generation catalyst, the carbon monoxide and hydrogen in the supplied first gas react over the olefin generation catalyst to generate a second gas containing olefins.

From the viewpoint of increasing the generated amount of olefins, the olefin generation catalyst is preferably a catalyst including a methanol synthesis catalyst and a ZSM-5 type zeolite catalyst.

For such a catalyst, the ZSM-5 type zeolite catalyst preferably contains P (phosphorus). When the ZSM-5 type zeolite catalyst contains P, since it is possible to reasonably control the acid strength of the ZSM-5 type zeolite catalyst, it is possible to curb the growth of excess hydrocarbon chains, and increase the generated amount of olefins such as ethylene and propylene.

In addition, for such a catalyst, the ratio of the mole number of SiO₂ relative to the mole number of Al₂O₃ (mole number of SiO₂/mole number of Al₂O₃) included in the ZSM-5 type zeolite catalyst is preferably 20 or more and 60 or less. By replacing a part of the silicon atoms in the silicate constituting the zeolite skeleton of the ZSM-5 type zeolite catalyst with aluminum atoms, since the aluminum atoms become acid sites, the zeolite catalyst exhibits a function as a solid acid. If the above ratio is 60 or less, since the acid sites of the ZSM-5 type zeolite catalyst increases, it is possible to increase the generated amount of olefins. In addition, if the above ratio is 20 or more, it is possible to suppress the catalyst degradation such as the coking caused by the acid sites being too abundant.

The heating temperature of the olefin generation catalyst is appropriately set according to the type of the olefin generation catalyst, the supplied amount of the first gas, etc. For example, the heating temperature of the olefin generation catalyst is 240°C or more and 350°C or less.

Regarding the pressure of the olefin synthesis reaction, the lower limit value is preferably 2.0 MPa or more, more preferably 3.0 MPa or more, and even more preferably 3.5 MPa or more, and the upper limit value is preferably 6.0 MPa or less, more preferably 5.5 MPa or less, and even more preferably 5.0 MPa or less.

At this time, at least the olefins which are the useful hydrocarbon are contained in the second gas generated in the useful hydrocarbon generating step S20. In addition to olefins, the second gas contains hydrocarbons, carbon dioxide, carbon monoxide and hydrogen which are unreacted substances in the dry reforming step S10 and the useful hydrocarbon generating step S20, and methanol, dimethyl ether and C10 and lower hydrocarbons which are byproducts of these steps.

The content ratio of the olefins contained in the second gas can be appropriately adjusted according to the conditions of the olefin synthesis reaction such as the heating temperature of the olefin generation catalyst and the supplied amount of the first gas.

In the case of the useful hydrocarbon being olefins, at least one of a hydrocarbon other than the target olefins and carbon monoxide is preferably contained in the carbon dioxide-containing gas. The yield of olefins drastically improves when the carbon dioxide-containing gas includes the above-mentioned substance.

In addition, in the case of producing aromatic hydrocarbons as the useful hydrocarbon, for example, the aromatic hydrocarbon synthesis reaction is performed using the useful hydrocarbon generation catalyst (aromatic hydrocarbon generation catalyst) for synthesizing aromatic hydrocarbon from the carbon monoxide and hydrogen contained in the first gas in the useful hydrocarbon generation step S20. In the useful hydrocarbon generation step S20, by heating the aromatic hydrocarbon generation catalyst while supplying the first gas to the aromatic hydrocarbon generation catalyst, the carbon monoxide and hydrogen in the supplied first gas react over the aromatic hydrocarbon generation catalyst to generate the second gas containing aromatic hydrocarbons.

From the viewpoint of increasing the generated amount of aromatic hydrocarbons, the aromatic hydrocarbon generation catalyst is preferably a catalyst including a methanol synthesis catalyst and a ZSM-5 type zeolite catalyst.

For this catalyst, as the active metal oxide, at least one of MnO, MnCr₂O₄, MnAl₂O₄, MnZrO₄, ZnO, ZnCr₂O₄ and ZnAl₂O₄ is preferably supported on the ZSM-5 type zeolite catalyst, and at least one of MnO, MnCr₂O₄, MnAl₂O₄ and MnZrO₄ is preferably supported. When the ZSM-5 type zeolite catalyst supports the above-mentioned metal oxide, it is possible to increase the generated amount of aromatic hydrocarbons.

In addition, for such a catalyst, the ratio of the mole number of SiO₂ relative to the mole number of Al₂O₃ (mole number of SiO₂/mole number of Al₂O₃) included in the ZSM-5 type zeolite catalyst is preferably 20 or more and 60 or less. By replacing a part of the silicon atoms in the silicate constituting the zeolite skeleton of the ZSM-5 type zeolite catalyst with aluminum atoms, since the aluminum atoms become acid sites, the zeolite catalyst exhibits a function as a solid acid. If the above ratio is 60 or more, since the acid sites of the ZSM-5 type zeolite catalyst increases, it is possible to increase the generated amount of aromatic hydrocarbons. In addition, if the above ratio is 20 or more, it is possible to suppress the catalyst degradation such as the coking caused by the acid sites being too abundant.

The heating temperature of the aromatic hydrocarbon generation catalyst is appropriately set according to the type of the aromatic hydrocarbon generation catalyst, the supplied amount of the first gas, etc. For example, the heating temperature of the aromatic hydrocarbon generation catalyst is 300°C or more and 600°C or less.

The pressure of the aromatic hydrocarbon synthesis reaction is preferably 0.1 MPa or more and 6.0 MPa or less.

At this time, at least the aromatic hydrocarbons that are the useful hydrocarbon are contained in the second gas generated in the useful hydrocarbon generating step S20. In addition to the aromatic hydrocarbons, the second gas contains hydrocarbons, carbon dioxide, carbon monoxide and hydrogen that are unreacted substances in the dry reforming step S10 and the useful hydrocarbon generating step S20, and methanol, dimethyl ether and hydrocarbons other than the aromatic hydrocarbon that is the useful hydrocarbon, which are byproducts of these steps, etc.

The content ratio of the aromatic hydrocarbons contained in the second gas can be appropriately adjusted according to the conditions of the aromatic hydrocarbon synthesis reaction such as the heating temperature of the aromatic hydrocarbon generation catalyst and the supplied amount of the first gas.

In the case of the useful hydrocarbon being aromatic hydrocarbons, at least one of a hydrocarbon other than the target aromatic hydrocarbon and carbon monoxide is preferably contained in the carbon dioxide-containing gas. When the carbon dioxide-containing gas includes the above-mentioned substance, the yield of aromatic hydrocarbons drastically improves.

In addition, in the case of producing gasoline as the useful hydrocarbon, for example, the gasoline synthesis reaction is performed using the useful hydrocarbon generation catalyst (gasoline generation catalyst) for synthesizing gasoline from the carbon monoxide and hydrogen contained in the first gas in the useful hydrocarbon generating step S20. In the useful hydrocarbon generating step S20, by heating the gasoline generation catalyst while supplying the first gas to the gasoline generation catalyst, the carbon monoxide and hydrogen in the supplied first gas react over the gasoline generation catalyst to generate the second gas containing gasoline.

From the viewpoint of increasing the generated amount of gasoline, the gasoline generation catalyst is preferably a catalyst including a methanol synthesis catalyst and a ZSM-5 type zeolite catalyst.

In addition, for such a catalyst, the ratio of the mole number of SiO₂ relative to the mole number of Al₂O₃ (mole number of SiO₂/mole number of Al₂O₃) included in the ZSM-5 type zeolite catalyst is preferably at least 12. In addition, the ZSM-5 type zeolite catalyst has a pore size formed up to a 12-membered ring preferably, and up to a 10-membered ring more preferably. By replacing a part of the silicon atoms in the silicate constituting the zeolite skeleton of the ZSM-5 type zeolite catalyst with aluminum atoms, since the aluminum atoms become acid sites, the zeolite catalyst exhibits a function as a solid acid. If the above such ZSM-5 type zeolite catalyst, it is possible to increase the generated amount of gasoline. Such a ZSM-5 type zeolite catalyst, for example, is ZSM-5, ZSM-11. ZSM-12, ZSM-23, ZSM-35 and ZSM-38.

The heating temperature of the gasoline generation catalyst is appropriately set according to the type of the gasoline generation catalyst, the supplied amount of the first gas, etc. For example, the heating temperature of the gasoline generation catalyst is 250°C or more and 500°C or less, and is preferably 300°C or more and 450°C or less.

The pressure of the gasoline synthesis reaction is preferably 25 bar or more and 150 bar or less.

At this time, at least gasoline that is the useful hydrocarbon is contained in the second gas generated in the useful hydrocarbon generating step S20. In addition to gasoline, the second gas contains hydrocarbons, carbon dioxide, carbon monoxide and hydrogen which are unreacted substances in the dry reforming step S10 and the useful hydrocarbon generating step S20, and methanol, dimethyl ether and hydrocarbons other than gasoline which are byproducts of these steps.

The content ratio of gasoline contained in the second gas can be appropriately adjusted according to the conditions of the gasoline synthesis reaction such as the heating temperature of the gasoline generation catalyst and the supplied amount of the first gas.

In the case of the useful hydrocarbon being gasoline, at least one of a hydrocarbon other than the target gasoline and carbon monoxide is more preferably contained in the carbon dioxide-containing gas. If the carbon dioxide-containing gas includes the above-mentioned substance, the yield of gasoline drastically improves.

In addition, in the case of producing liquefied petroleum gas as the useful hydrocarbon, for example, the liquefied petroleum gas synthesis reaction is performed using the useful hydrocarbon generation catalyst (LPG generation catalyst) for synthesizing liquefied petroleum gas from the carbon monoxide and hydrogen contained in the first gas in the useful hydrocarbon generating step S20. In the useful hydrocarbon generating step S20, by heating the LPG generation catalyst while supplying the first gas to the LPG generation catalyst, the carbon monoxide and hydrogen in the supplied first gas react over the LPG generation catalyst to generate the second gas containing liquefied petroleum gas.

From the viewpoint of increasing the generated amount of liquefied petroleum gas and increasing the content ratio of propane contained in the liquefied petroleum gas, the LPG generation catalyst is preferably a catalyst including a methanol synthesis catalyst and a ZSM-5 type zeolite catalyst.

For such a catalyst, it is preferable to support Pt (platinum) or Pt and Pd (palladium) on the ZSM-5 type zeolite catalyst. If the ZSM-5 type zeolite catalyst supports Pt or Pt and Pd, it is possible to increase the generated amount of liquefied petroleum gas and the content ratio of propane. Regarding the state of Pt and Pd supported on the ZSM-5 type zeolite catalyst, elemental metal Pt and elemental metal Pd may coexist, Pt and Pd may alloy, or at least one elemental metal of Pt and Pd and an alloy of Pt and Pd may coexist.

In addition, for such a catalyst, the ZSM-5 type zeolite catalyst preferably contains P. When the ZSM-5 type zeolite catalyst contains P, since it is possible to properly control the acid strength of the ZSM-5 type zeolite catalyst, it is possible to increase the generated amount of liquefied petroleum gas and the content ratio of propane.

In addition, for such a catalyst, the ratio of the mole number of SiO₂ relative to the mole number of Al₂O₃ (mole number of SiO₂/mole number of Al₂O₃) included in the ZSM-5 type zeolite catalyst is preferably 20 or more and 60 or less. By replacing a part of the silicon atoms in the silicate constituting the zeolite skeleton of the ZSM-5 type zeolite catalyst with aluminum atoms, since the aluminum atoms become acid sites, the zeolite catalyst exhibits a function as a solid acid. If the above ratio is 60 or more, since the acid sites of the ZSM-5 type zeolite catalyst increase, it is possible to increase the generated amount of liquefied petroleum gas and the content ratio of propane. In addition, if the above ratio is 20 or more, it is possible to suppress the catalyst degradation such as the coking caused by the acid sites being too abundant.

The heating temperature of LPG generation catalyst is appropriately set according to the type of the LPG generation catalyst, the supplied amount of the first gas, etc. For example, the heating temperature of the LPG generation catalyst is 240°C or more and 350°C or less.

For the pressure of the liquefied petroleum gas synthesis reaction, the lower limit value is preferably 2.0 MPa or more, more preferably 3.0 MPa or more, and even more preferably 3.5 MPa or more, and the upper limit value is preferably 6.0 MPa or less, more preferably 5.5 MPa or less, and even more preferably 5.0 MPa or less.

At this time, at least the liquefied petroleum gas which is the useful hydrocarbon is contained in the second gas generated in the useful hydrocarbon generating step S20. In addition to the liquefied petroleum gas, the second gas contains hydrocarbons, carbon dioxide, carbon monoxide and hydrogen that are unreacted substances in the dry reforming step S10 and the useful hydrocarbon generating step S20, and methanol, dimethyl ether, C1 and C2 hydrocarbons, and C5 or higher hydrocarbons, which are byproducts of these steps, etc.

The content ratio of the liquefied petroleum gas contained in the second gas can be appropriately adjusted according to the conditions of the liquefied petroleum gas synthesis reaction such as the heating temperature of the LPG generation catalyst and the supplied amount of the first gas.

In the case of the useful hydrocarbon being liquefied petroleum gas, hydrocarbons other than C3 and C4 are preferably contained in the carbon dioxide-containing gas, at least one of C1 to C2 hydrocarbons and carbon monoxide are more preferably contained, and ethane is even more preferably contained. If the carbon dioxide-containing gas includes the above-mentioned substance, the yield of liquefied petroleum gas drastically improves.

In addition, in the case of producing liquid hydrocarbons as the useful hydrocarbon, for example, the liquid hydrocarbon synthesis reaction is performed using the useful hydrocarbon generation catalyst (liquid hydrocarbon generation catalyst) for synthesizing liquid hydrocarbons from the carbon monoxide and hydrogen contained in the first gas in the useful hydrocarbon generating step S20. In the useful hydrocarbon generating step S20, by heating the liquid hydrocarbon generation catalyst while supplying the first gas to the liquid hydrocarbon generation catalyst, the carbon monoxide and hydrogen in the supplied first gas react over the liquid hydrocarbon generation catalyst to generate a second gas containing liquid hydrocarbons.

From the viewpoint of increasing the generated amount of liquid hydrocarbons, the liquid hydrocarbon generation catalyst is preferably an FT (Fischer-Tropsch) synthesis catalyst.

As the FT synthesis catalyst, at least one type of metal having activity in the FT reaction is preferaby supported on the support. The support is preferably Al₂O₃ or SiO₂. In addition, the metal having activity in the FT reaction is preferably Ru, Co, Fe or Ni, and more preferably Ru or Co. In the case of the metal being Ru, the FT synthesis catalyst preferably contains Ru in 0.5% by mass or more and 5.0% by mass or less. In the case of the metal being Co, the FT synthesis catalyst preferably contains Co in 5.0% by mass or more and 40.0% by mass or less.

In addition, the FT synthesis catalyst may be the catalyst structure given as a preferred example of the above-mentioned dry reforming catalyst, and may contain Co inside.

The heating temperature of the liquid hydrocarbon generation catalyst is appropriately set according to the type of the liquid hydrocarbon generation catalyst, the supplied amount of the first gas, etc. For example, the heating temperature of the liquid hydrocarbon generation catalyst is 200°C or more and 350°C or less, preferably 210°C or more and 310°C or less, and more preferably 220°C or more and 290°C or less.

Regarding the pressure of the liquid hydrocarbon synthesis reaction, it is preferably 0.5 MPa or more and 10.0 MPa or less, more preferably 0.7 MPa or more and 7.0 MPa or less, and even more preferably 0.8 MPa or more and 5.0 MPa or less.

At this time, at least liquid hydrocarbons which is the useful hydrocarbon are contained in the second gas generated in the useful hydrocarbon generating step S20. In addition to the liquid hydrocarbons, the second gas contains hydrocarbons, carbon dioxide, carbon monoxide and hydrogen which are unreacted substances in the dry reforming step S10 and the useful hydrocarbon generating step S20, and methanol, dimethyl ether and C4 and lower hydrocarbons which are byproducts of these steps, etc.

The content ratio of the liquid hydrocarbons contained in the second gas can be appropriately adjusted according to the conditions of the liquid hydrocarbon synthesis reaction such as the heating temperature of the liquid hydrocarbon generation catalyst, the supplied amount of the first gas, etc.

In the case of the useful hydrocarbon being liquid hydrocarbons, at least one of a C4 or lower hydrocarbon and carbon monoxide is preferably contained in the carbon dioxide-containing gas. If the carbon dioxide-containing gas includes the above-mentioned substance, the yield of liquid hydrocarbons drastically improves.

### (Useful Hydrocarbon Production Device)

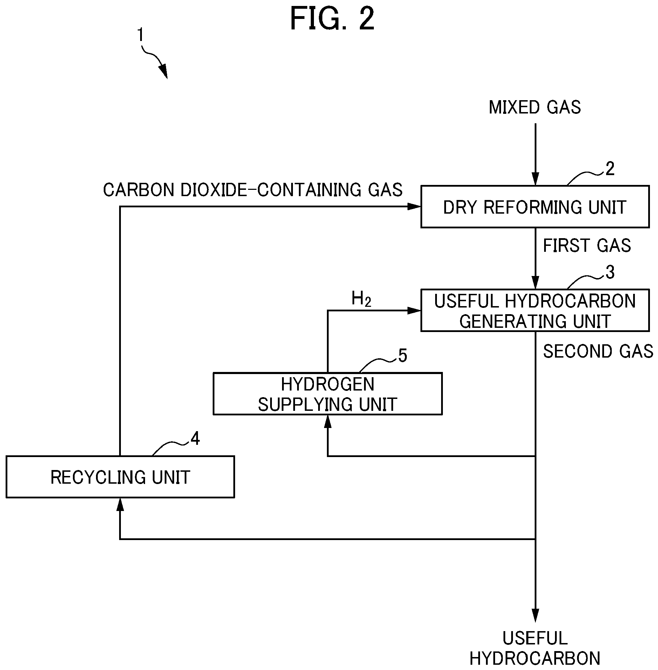

Next, a useful hydrocarbon production device of the embodiment will be explained. FIG. 2 is a schematic diagram showing an example of a useful hydrocarbon production device of the embodiment. A useful hydrocarbon production device 1 of the embodiment is a device which performs the above useful hydrocarbon production method of the embodiment.

As shown in FIG. 2, the useful hydrocarbon production device 1 includes the dry reforming unit 2, the useful hydrocarbon generating unit 3 and the recycling unit 4.

In the dry reforming unit 2 constituting the useful hydrocarbon production device 1, the mixed gas containing the methane-containing hydrocarbon and carbon dioxide is supplied. The dry reforming unit 2 includes the dry reforming catalyst (not shown in FIg.2) and a heater (not shown in Fig.2) which heats the dry reforming catalyst. For example, the heater is a furnace. The dry reforming catalyst is heated to a predetermined temperature by the heater.

When the mixed gas is supplied to the dry reforming unit 2 including the dry reforming catalyst in the heated state, the dry reforming unit 2 causes the methane-containing hydrocarbon and carbon dioxide in the mixed gas to react over the dry reforming catalyst to generate the first gas containing carbon monoxide and hydrogen. In this way, dry reforming is performed on the mixed gas in the dry reforming unit 2.

The first gas generated in the dry reforming unit 2 is supplied to the useful hydrocarbon generating unit 3 constituting the useful hydrocarbon production device 1. The useful hydrocarbon generating unit 3 includes the useful hydrocarbon generation catalyst (not shown in Fig.2) and a heater (not shown in Fig.2) which heats the useful hydrocarbon generation catalyst. For example, the heater is a furnace. The useful hydrocarbon generation catalyst is heated to a predetermined temperature by the heater.

When the first gas is supplied to the useful hydrocarbon generating unit 3 including the useful hydrocarbon generation catalyst in the heated state, the useful hydrocarbon generating unit 3 causes the carbon monoxide and hydrogen in the first gas to react over the useful hydrocarbon generation catalyst to generate the second gas containing the target useful hydrocarbon. In this way, the useful hydrocarbon synthesis reaction is performed on the first gas in the useful hydrocarbon generating unit 3.

The recycling unit 4 constituting the useful hydrocarbon production device 1 separates the carbon dioxide-containing gas from the second gas generated in the useful hydrocarbon generating unit 3 and supplies the carbon dioxide-containing gas to the dry reforming unit 2. When supplying the carbon dioxide-containing gas separated from the second gas discharged by the useful hydrocarbon generating unit 3 to the dry reforming unit 2 by the recycling unit 4, it is possible to suppress the coking and the carbon dioxide shortage in the dry reforming unit 2. For this reason, it is possible to efficiently produce the target useful hydrocarbon over a long period.

In addition, the recycling unit 4 preferably adjusts the supplied amount of the carbon dioxide-containing gas supplied to the dry reforming unit 2, in response to the ratio (M_{HC}/M_{CO2}) of total carbon mole number M_{HC} of hydrocarbon supplied to the dry reforming unit 2 relative to the total carbon mole number M_{CO2} of carbon dioxide contained in the mixed gas and carbon dioxide contained in the carbon dioxide-containing gas supplied to the dry reforming unit 2. Hydrocarbon supplied to the dry reforming unit 2 is the methane-containing hydrocarbon contained in the mixed gas and the hydrocarbon contained in the carbon dioxide-containing gas.

If the carbon mole ratio (M_{HC}/M_{CO2}) of the dry reforming unit 2 is large, there is a possibility of causing the coking and the carbon dioxide shortage in the dry reforming unit 2. For this reason, when the carbon mole ratio (M_{HC}/M_{CO2}) in the dry reforming unit 2 is large, if the recycling unit 4 increases the supplied amount of the carbon dioxide-containing gas supplied to the dry reforming unit 2, it is possible to suppress the coking and the carbon dioxide shortage in the dry reforming unit 2.

In this way, it is possible to more efficiently produce the target useful hydrocarbon, by the recycling unit 4 adjusting the supplied amount of the carbon dioxide-containing gas supplied to the dry reforming unit 2, in response to the carbon mole ratio (M_{HC}/M_{CO2}) in the dry reforming unit 2, such as the recycling unit 4 increasing the supplied amount of the carbon dioxide-containing gas supplied to the dry reforming unit 2 when the carbon mole ratio (M_{HC}/M_{CO2}) in the dry reforming unit 2 is large. If adjusting the supplied amount of the carbon dioxide-containing gas supplied to the dry reforming unit 2, and controlling the above ratio (M_{HC}/M_{CO2}) in the dry reforming unit 2 to preferably 1.30 or less, and more preferably 1.00 or less, it is possible to further improve the above effects.

In addition, the CO₂ concentration of the carbon dioxide-containing gas supplied to the dry reforming unit 2 by the recycling unit 4 is preferably 50% or more, more preferably 60% or more, and even more preferably 70% or more. If the CO₂ concentration of the carbon dioxide-containing gas is 50% or more, it is possible to sufficiently suppress the coking and the carbon dioxide shortage in the dry reforming unit 2, by adjusting the supplied amount of the recycle gas of the recycling unit 4.

In addition, the useful hydrocarbon production device 1 of the embodiment may further include a mixed gas generating unit (not shown in Fig.2). The mixed gas generating unit generates a mixed gas containing the methane-containing hydrocarbon and carbon dioxide, and supplies the mixed gas to the dry reforming unit 2. The mixed gas generating unit preferably performs a pyrolysis treatment with biomass resource including woody biomass or waste plastic as the raw material, or a gasification process which oxidatively decomposes these raw materials by adding an oxidant (H₂O, oxygen, carbon dioxide).

With the pyrolysis treatment or the gasification process, a gas containing at least carbon monoxide and hydrogen generates, and hydrocarbons and carbon dioxide also generate as impurities. These hydrocarbons and carbon dioxide can be supplied to the dry reforming unit 2 from the mixed gas generating unit.

At this time, the useful hydrocarbon production device 1 of the embodiment may include, between the mixed gas generating unit and the dry reforming unit 2, a separating unit that separates the carbon monoxide and hydrogen from the gas containing hydrocarbons and carbon dioxide.

In addition, trace amounts of sulfur and/or halogens may mix as impurities into the gas generated by the pyrolysis treatment or the gasification process. These substances become poisonous substances to the dry reforming catalyst used in the dry reforming unit 2 and the useful hydrocarbon generation catalyst used in the useful hydrocarbon generating unit 3; therefore, there is possibility of impairing the catalyst performance, and becoming a cause for damage to equipment at the same time. Therefore, it is possible to appropriately provide a desulfurization step or dehalogenation step as a pretreatment step for the above-mentioned generated gas between the mixed gas generating unit and the dry reforming unit 2.

In addition, the useful hydrocarbon production device 1 of the embodiment preferably further includes a hydrogen supplying unit 5 that separates hydrogen from the second gas generated in the useful hydrocarbon generating unit 3 and supplies hydrogen to the useful hydrocarbon generating unit 3. If supplying hydrogen which is an impurity in the second gas discharged from the useful hydrocarbon generating unit 3 to the useful hydrocarbon generating unit 3 by the hydrogen supplying unit 5, it is possible to suppress the hydrogen shortage of the useful hydrocarbon generating unit 3. For this reason, it is possible to efficiently produce the target useful hydrocarbon over a long period. In addition, since the hydrogen discharged from the useful hydrocarbon generating unit 3 is reused as the raw material of the useful hydrocarbon generating unit 3, it is possible to reduce the environmental burden.

In addition, the hydrogen supplying unit 5 preferably adjusts the supplied amount of hydrogen supplied to the useful hydrocarbon generating unit 3 in response to the mole number M_{H} of hydrogen in the useful hydrocarbon generating unit 3, and the supplied amount of hydrogen supplied to the useful hydrocarbon generating unit 3 is more preferably adjusted in response to the type of the useful hydrocarbon and the reaction for producing the useful hydrocarbon as well as the above mole number M_{H}.

For example, in the case of producing liquefied petroleum gas as the useful hydrocarbon, if the mole number M_{H} of hydrogen in the useful hydrocarbon generating unit 3 is small, there is a possibility of the hydrogen shortage occurring in the useful hydrocarbon generating unit 3. For this reason, when the mole number M_{H} of hydrogen in the useful hydrocarbon generating unit 3 is small, if the hydrogen supplying unit 5 increases the supplied amount of hydrogen supplied to the useful hydrocarbon generating unit 3, it is possible to suppress the hydrogen shortage in the useful hydrocarbon generating unit 3.

In this way, when the mole number M_{H} of hydrogen in the useful hydrocarbon generating unit 3 is small, it is possible to more efficiently produce the target useful hydrocarbon by the hydrogen supplying unit 5 adjusting the supplied amount of hydrogen supplied to the useful hydrocarbon generating unit 3, in response to the mole number M_{H} of hydrogen in the useful hydrocarbon generating unit 3, such as increasing the supplied amount of hydrogen supplied to the useful hydrocarbon generating unit 3 by the hydrogen supplying unit 5.

In addition, the hydrogen supplying unit 5 preferably adjusts the supplied amount of hydrogen supplied to the useful hydrocarbon generating unit 3, in response to the mole ratio (M_{H}/M_{CO}) of the mole number M_{H} of hydrogen relative to the mole number M_{CO} of carbon monoxide in the useful hydrocarbon generating unit 3.

For the mole ratio (M_{H}/M_{CO}) of the useful hydrocarbon generating unit 3, when the ratio of hydrogen relative to the carbon monoxide is extremely small, there is a possibility of leading to the hydrogen shortage. For this reason, when the mole ratio (M_{H}/M_{CO}) in the useful hydrocarbon generating unit 3 is extremely small, if increasing the supplied amount of hydrogen supplied to the useful hydrocarbon generating unit 3 by the hydrogen supplying unit 5, it is possible to suppress the hydrogen shortage in the useful hydrocarbon generating unit 3. In this way, by the hydrogen supplying unit 5 adjusting the supplied amount of hydrogen supplied to the useful hydrocarbon generating unit 3 in response to the mole ratio (M_{H}/M_{CO}) in the useful hydrocarbon generating unit 3, it is possible to more reliably suppress the hydrogen shortage in the useful hydrocarbon generating unit 3.

In addition, the useful hydrocarbon production device 1 of the embodiment may further include an adjusting unit (not shown in Fig.2) which adjusts the mole ratio (M_{H}/M_{CO}) of the mole number M_{H} of hydrogen relative to the mole number M_{CO} of carbon monoxide contained in the first gas obtained by the dry reforming unit 2. The adjusting unit can be provided before the dry reforming unit 2.

The adjusting unit adjusts the mole ratio (M_{H}/M_{CO}) in the first gas discharged from the dry reforming unit 2. The adjusting unit is preferably a steam drum. The steam drum supplies steam to the dry reforming unit 2 to adjust the mole ratio (M_{H}/M_{CO}) in the first gas. With the adjusting unit, the mole ratio (M_{H}/M_{CO}) in the first gas is adjusted in response to the conditions of the useful hydrocarbon synthesis reaction carried out in the useful hydrocarbon generating unit 3.

If the first gas having the mole ratio (M_{H}/M_{CO}) adjusted by the adjusting unit is supplied to the useful hydrocarbon generating unit 3, it is possible to suppress the hydrogen shortage by the useful hydrocarbon generating unit 3. For this reason, it is possible to efficiently produce the target useful hydrocarbon over a long period.

In addition, the useful hydrocarbon production device 1 of the embodiment may further include a combusting unit (not shown in Fig.2) which separates a substance containing carbon atoms from the second gas and combusts the substance containing carbon atoms to generate carbon dioxide. In this case, the recycling unit 4 supplies the carbon dioxide-containing gas and carbon dioxide generated by the combusting unit to the dry reforming unit 2.

The combusting unit separates the substance containing carbon atoms in the second gas discharged from the useful hydrocarbon generating unit 3 from the second gas, and combusts the separated substance containing carbon atoms to generate carbon dioxide. Such substance containing carbon atoms combusted in the combusting unit contains at least one substance selected from the group consisting of methane, carbon monoxide, methanol, dimethyl ether and hydrocarbons other than the target useful hydrocarbon. It should be noted that the substance containing carbon atoms combusted in the combusting unit may or may not contain carbon dioxide.

The recycling unit 4 supplies carbon dioxide generated by the combusting unit to the dry reforming unit 2 in addition to the carbon dioxide-containing gas separated from the second gas generated in the useful hydrocarbon generating unit 3. The amount of carbon dioxide supplied to the dry reforming unit 2 can be increased by the combusting unit. For this reason, since it is possible to further suppress the coking and the carbon dioxide shortage by the dry reforming unit 2, it is possible to efficiently produce the target useful hydrocarbon over a long period. In addition, it is possible to recover the heat generated in the combusting unit, and use in the dry reforming unit 2 or the useful hydrocarbon generating unit 3.

In addition, it is preferable to adjust the combustion rate of the combusting unit in response to the proportions of hydrocarbons and carbon dioxide supplied to the dry reforming unit 2. By changing the combustion rate of the combusting unit, it is possible to adjust the amount of carbon dioxide generated in the combusting unit. For this reason, since it is possible to adjust the generated amount of carbon dioxide by adjusting the combustion rate of the combusting unit in response to the proportions of hydrocarbons and carbon dioxide supplied to the dry reforming unit 2, and to adjust the amount of carbon dioxide supplied to the dry reforming unit 2 by the recycling unit 4, it is possible to increase the generated amount of the target useful hydrocarbon.

If the combustion rate of the combusting unit is 3% or more, it is possible to sufficiently suppress the carbon dioxide shortage in the dry reforming unit 2. In addition, if the combustion rate of the combusting unit is 50% or less, the proportions of hydrocarbons and carbon dioxide supplied to the dry reforming unit 2 is favorable. For this reason, if the combustion rate of the combusting unit is 3% or more and 50% or less, it is possible to efficiently produce the target useful hydrocarbon over a long period.

In addition, in the case of supplying biogas to the dry reforming unit 2, the useful hydrocarbon production device 1 of the embodiment may include a desulfurization unit (not shown in Fig.2) which desulfurizes the biogas. The desulfurization unit is connected on the upstream side of the dry reforming unit 2. The sulfur components in the biogas decrease the catalyst performance of the dry reforming catalyst used in the dry reforming unit 2 and the useful hydrocarbon generation catalyst used in the useful hydrocarbon generating unit 3. By desulfurizing the biogas in the desulfurization unit, it is possible to suppress a decline in the catalyst performance of the dry reforming catalyst and the useful hydrocarbon generation catalyst. For this reason, it is possible to stably produce the target useful hydrocarbon over a long period.

In addition, the useful hydrocarbon production device 1 of the embodiment may include a dewatering unit (not shown in Fig.2) which dewaters the first gas generated by the dry reforming unit 2. The dewatering unit can be provided between the dry reforming unit 2 and the useful hydrocarbon generating unit 3. By dewatering the first gas in the dewatering unit, it is possible to improve the efficiency of the synthesis reaction of the useful hydrocarbon performed in the useful hydrocarbon generating unit 3, and further possible to suppress a decline in catalyst performance of the useful hydrocarbon generation catalyst due to moisture.

In addition, the useful hydrocarbon production device 1 of the embodiment may include a compressing unit (not shown in Fig.2) which compresses the first gas generated in the dry reforming unit 2. The compressing unit can be provided between the dry reforming unit 2 and the useful hydrocarbon generating unit 3. By compressing the first gas in the compressing unit, since the compressed first gas is supplied to the useful hydrocarbon generating unit 3, it is possible to improve the efficiency of the synthesis reaction of the target useful hydrocarbon performed in the useful hydrocarbon generating unit 3.

In addition, the useful hydrocarbon produced in the useful hydrocarbon production device 1 is similar to the useful hydrocarbon produced by the above-mentioned useful hydrocarbon production method, and is preferably at least one hydrocarbon selected from the group consisting of olefins, aromatic hydrocarbons, gasoline, liquefied petroleum gas and liquid hydrocarbon, and is more preferably liquefied petroleum gas.

According to the type of useful hydrocarbon to be produced by the useful hydrocarbon production device 1, it is possible to synthesize a hydrocarbon mixture with various target useful hydrocarbons as main components from carbon monoxide and hydrogen by various useful hydrocarbon synthesis reactions, under the appropriate catalyst and reaction conditions in the useful hydrocarbon generating unit 3. Various useful hydrocarbon synthesis reactions performed in the useful hydrocarbon generating unit 3 are similar to the conditions of the useful hydrocarbon generating step S20 in the above explained useful hydrocarbon production method.

According to the above explained embodiments, by focusing on relatively easily obtainable methane-containing hydrocarbons and carbon dioxide, dry reforming which can generate carbon monoxide and hydrogen from the methane-containing hydrocarbons and carbon dioxide, and the fact that carbon dioxide which is an impurity is contained in the second gas obtained by the useful hydrocarbon generating step, and by reusing the carbon dioxide in the second gas by supplying to the dry reforming step, it is possible to use easily obtainable raw materials to efficiently produce a target useful hydrocarbon over a long period.

Furthermore, it is possible to suitably apply the technology of the present disclosure also to natural gas abundantly containing carbon dioxide as an impurity produced from a gas field such as an in Indonesia or Malaysia which have abundant natural gas reserves, where removal treatment costs of the impurities have been a problem in recent years. In place of the above-mentioned mixed gas, if using a gas having methane/carbon dioxide mole ratio of 1 or more and 9 or less, and performing dry reforming to generate the first gas containing carbon monoxide and hydrogen from this gas, since it possible to efficiently supply large amounts of carbon dioxide to the dry reforming step, the target useful hydrocarbon can be efficiently produced over a long period, and thus the problem of removal treatment cost on the gas abundantly containing carbon dioxide as an impurity can be solved.

Although embodiments have been explained above, the present invention is not to be limited to the above embodiments, and encompasses every embodiment included in the gist and scope of the claims of the present disclosure, and various modifications thereto are possible with the scope of the present disclosure.

### EXAMPLES

Next, Examples and Comparative Examples will be explained; however, the present invention is not to be limited to these examples.

### (Examples 1-1 to 1-5, Reference Example 1-1)

Using the device shown in FIG. 2, liquefied petroleum gas that is the useful hydrocarbon was produced by the production method shown in FIG. 1. More specifically, it is as follows.

A fixed-bed flow reactor was used in the dry reforming unit 2. A reaction tube of quartz glass was used. In the above way, methane is contained more abundantly than carbon dioxide in biogas. For this reason, assuming that carbon dioxide was supplied from the recycling unit 4, a raw material having the same ratio (based on carbon) of methane to carbon dioxide was supplied to the dry reforming unit 2. The total flowrate of methane and carbon dioxide was set to 10 ml/min. So as to be GHSV = 2170 (1/h), the dry reforming catalyst was fixed by filling the dry reforming catalyst and packing quartz wool above and below of the dry reforming catalyst. The above-mentioned dry reforming catalyst containing 1% by mass of Ni was used in the dry reforming catalyst. The heating temperature of the dry reforming catalyst was set to 700°C. The first gas generated by the dry reforming unit 2 was collected by gas pack and analyzed by GC-TCD. It should be noted that reduction treatment was conducted under hydrogen flow at 700°C for 1.5 hours on the dry reforming catalyst as a pre-treatment.

A fixed-bed flow reactor was used in the useful hydrocarbon generating unit 3. A reaction tube of stainless steel was used. In the above way, the dry reforming unit 2 generates carbon monoxide and hydrogen in the same proportions. For this reason, assuming that hydrogen is not supplied from the hydrogen supplying unit 5, the first gas having the same ratio of carbon monoxide and hydrogen was supplied to the useful hydrocarbon generating unit 3. The flowrate of the first gas supplied to the useful hydrocarbon generating unit 3 was set to 37.2 ml/min. So as to be GHSV = 2000 (1/h), the LPG generation catalyst was fixed by filling the useful hydrocarbon generation catalyst (LPG generation catalyst) and packing quartz wool above and below of the LPG generation catalyst. A catalyst made by physically mixing the methanol synthesis catalyst and the ZSM-5 type zeolite catalyst supporting Pt and Pd in the weight ratio of 1:1 was used in the LPG generation catalyst. The heating temperature of the LPG generation catalyst was set to 280°C. The pressure in the useful hydrocarbon generating unit 3 was set to 5.0 MPa. The second gas generated by the useful hydrocarbon generating unit 3 was collected by gas pack and analyzed by GC-TCD and FID. It should be noted that reduction treatment was conducted under hydrogen flow at 380°C for 2 hours on the LPG generation catalyst as a pre-treatment.

### (Comparative Examples 1-1 to 1-3)

Other than changing as shown in Table 1, the same was conducted as the above examples. In Comparative Examples 1-1 to 1-3, the method assumed not to supply carbon dioxide from the recycling unit 4.

In the ranking of synthesis gas yield in Table 1, a synthesized gas yield of 1.20 kg/Nm³ or greater was defined as "good", and a synthesized gas yield of less than 1.20 kg/Nm³ was defined as "poor". In addition, for the ranking of comprehensive evaluation, a case of the ranks of both the synthesized gas yield initially and after 7 days being good was defined as " O", a case of the rank of one of the synthesized gas yield initially and after 7 days being good was defined as " △", and a case of the ranks of both the synthesized gas yield initially and after 7 days being poor was defined as " X".

**[Table 1]**

| | Outlet component of recycling step (S30) | | | | | Reaction conditions of dry reforming step (S10) | | | | | | Dry reforming reaction result | | | | Comprehe nsive evaluation |
|---|---|---|---|---|---|---|---|---|---|---|---|---|---|---|---|---|
| | Composition (mole ratio) | | | | CO₂ mole concentration (%) | Composition (mole ratio) | | | | Hydrocarbon / carbon dioxide (carbon mole ratio) | Heating temperature | CO₂ conversion rate (%) | | Synthesis gas yield (kg/Nm³) | | |
| | | | | | | | | | | | (°C) | Initial | After 7 days | Initial | After 7 days | |
| | CO₂ | CH₄ | C₂H₆ | CO | | CO₂ | CH₄ | C₂H₆ | CO | | | | | | | |
| Example 1-1 | 1 | 0 | 0 | 0 | 100 | 5 | 5 | 0 | 0 | 1.00 | 700 | 82 | 82 | good | good | ○ |
| Example 1-2 | 1 | 0 | 0 | 0 | 100 | 5 | 5 | 0 | 0 | 1.00 | 800 | 94 | 94 | good | good | ○ |
| Example 1-3 | 20 | 1 | 4 | 0 | 80 | 9 | 6 | 1 | 0 | 0.89 | 900 | 96 | 96 | good | good | ○ |
| Example 1-4 | 20 | 1 | 4 | 3 | 71 | 9 | 6 | 1 | 1 | 0.89 | 900 | 97 | 96 | good | good | ○ |
| Example 1-5 | 20 | 4 | 1 | 15 | 50 | 9 | 6 | 1 | 4 | 0.89 | 900 | 96 | 92 | good | good | ○ |
| Reference Example 1-1 | 8 | 1 | 4 | 0 | 62 | 6 | 6 | 1 | 0 | 1.33 | 900 | 93 | 5 | good | poor | Δ |
| Comparative Example 1-1 | 0 | 0 | 0 | 0 | - | 4 | 6 | 0 | 0 | 1.50 | 700 | 94 | 92 | poor | poor | × |
| Comparative Example 1-2 | 0 | 0 | 0 | 0 | - | 4 | 6 | 0 | 0 | 1.50 | 800 | 99 | 87 | poor | poor | × |
| Comparative Example 1-3 | 0 | 0 | 1 | 0 | - | 4 | 6 | 1 | 0 | 2.00 | 900 | 33 | 15 | poor | poor | × |

As shown in Table 1, in the Examples supplying carbon dioxide from the recycling unit 4 to the dry reforming unit 2, since the carbon mole ratio of hydrocarbon/carbon dioxide in the inlet gas of the dry reforming step is favorable compared to the Comparative Examples, the synthesized gas yield could increase. At this time, when the carbon mole ratio of hydrocarbon/carbon dioxide is set to 1.30 or less, the synthesized gas yield is favorable. More preferably, if setting to 1.00 or less, since catalyst degradation is well restrained, it is possible to efficiently produce the synthesis gas over a long period, which suggested that it is possible to increase the yield of useful hydrocarbon.

In addition, according to Examples 1-5, if the concentration of carbon dioxide in the recycle gas is 50% or more carbon molar ratio, the amount of carbon dioxide needed for favorably adjusting the above-mentioned carbon mole ratio of hydrocarbon/carbon dioxide can be secured.

In the above way, by favorably maintaining both the CO₂ concentration in the recycle gas and the carbon mole ratio of hydrocarbon/carbon dioxide in the inlet gas of the dry reforming step, it is possible to efficiently produce the synthesis gas over a long period, which suggested that it is possible to increase the yield of useful hydrocarbon.

### (Examples 2 to 3)

Other than using a first gas having the mole ratio of carbon monoxide to hydrogen shown in Table 2, it was performed similarly to Example 1-1. In other words, in Examples 2 and 3, hydrogen was also supplied from the hydrogen supplying unit 5.

**[Table 2]**

| | H₂/CO ratio of first gas (mole ratio) | Yield of liquefied petroleum gas (%) |
|---|---|---|
| Example 1-1 | 1.0 | 9.2 |
| Example 2 | 1.5 | 11.3 |
| Example 3 | 2.0 | 16.3 |

As shown in Table 2, the yield of liquefied petroleum gas could be increased by supplying hydrogen from the hydrogen supplying unit 5 and doubling the mole ratio of hydrogen relative to carbon dioxide.

### (Examples 3-1 to 3-3)

Next, in Example 3, the supplied amount of carbon dioxide from the recycling unit 4 to the dry reforming unit 2 was adjusted by operating the combusting unit at the combustion rate shown in Table 3. Then, the total hydrocarbon amount excluding the liquefied petroleum gas component in the second gas and the carbon dioxide amount in the second gas were measured, and the proportions of the total hydrocarbon excluding the liquefied petroleum gas component and carbon dioxide in the second gas were calculated. It should be noted that the combusting unit was not operated in Example 3-1.

**[Table 3]**

| | Combustion rate (%) | Total hydrocarbon amount in inlet gas of dry reforming step (C-mol/Nm3) | CO₂ amount in inlet gas of dry reforming step (C-mol/Nm3) | Total hydrocarbon amount / CO₂ amount in inlet gas of dry reforming step (-) |
|---|---|---|---|---|
| Example 3-1 | 0 | 42.2 | 39.4 | 1.1 |
| Example 3-2 | 3 | 40.8 | 40.8 | 1.0 |
| Example 3-3 | 23 | 32.6 | 49.0 | 0.7 |

As shown in Table 3, when changing the combustion rate of the combusting unit, since it was possible to adjust the amount of carbon dioxide, it was suggested that it is possible to increase the generated amount of the liquefied petroleum gas.

From the above, it was suggested that it is possible to efficiently produce the liquefied petroleum gas over a long period, using easily obtainable raw materials by the above Examples.

### (Example 4)

Except that as the useful hydrocarbon generation catalyst (olefin generation catalyst) filled into the useful hydrocarbon generating unit 3, using one made by physically mixing the methanol synthesis catalyst and the ZSM-5 type zeolite catalyst supporting P in the weight ratio of 1:1, setting the reaction temperature to 320°C, GHSV =2000 h⁻¹, pressure to 5.0 MPa, and supplied H₂/CO ratio to 2.0, olefins were produced similarly to the above Examples.

### (Example 5)

Except that as the useful hydrocarbon generation catalyst (aromatic hydrocarbon generation catalyst) filled into the useful hydrocarbon generating unit 3, using one made by physically mixing the methanol synthesis catalyst and the ZSM-5 type zeolite catalyst made by physically mixing 1 wt% of ZnCr₂O₄ (ZnCr₂O₄/ZSM-5) in the weight ratio of 1:1, setting the reaction temperature to 350°C, GHSV = 500 h⁻¹, pressure to 5.0 MPa, and supplied H₂/CO ratio to 2.5, aromatic hydrocarbons were produced similarly to the above Examples.

### (Example 6)

Except that as the useful hydrocarbon generation catalyst (gasoline generation catalyst) filled into the useful hydrocarbon generating unit 3, using one made by physically mixing the methanol synthesis catalyst and the ZSM-5 type zeolite in the weight ratio of 1:1, setting the reaction temperature to 370°C, GHSV = 3700 h⁻¹, pressure to 5.0 MPa, and supplied H₂/CO ratio to 2.0, gasoline was produced similarly to the above Examples.

### (Example 7)

Except that as the useful hydrocarbon generation catalyst (liquid hydrocarbon generation catalyst) filled into the useful hydrocarbon generating unit 3, using 0.5 wt% Co supporting SiO₂, setting the reaction temperature to 230°C, GHSV = 3000 h⁻¹, pressure to 2.0 MPa, and supplied H₂/CO ratio to 2.0, liquid hydrocarbon was produced similarly to the above Examples.

**[Table 4]**

| | Target substance | CO conversion rate (%) | Target substance selectivity in hydrocarbons (%) |
|---|---|---|---|
| Example 4 | Olefins | 93 | 72 |
| Example 5 | Aromatic hydrocarbons | 60 | 53 |
| Example 6 | Gasoline | 93 | 45 |
| Example 7 | Liquid hydrocarbons | 60 | 55 |

As shown in Table 4, it was also possible to produce olefin, aromatic hydrocarbon, gasoline fraction, and liquid hydrocarbon in the useful hydrocarbon generating step by appropriately changing the catalyst and reaction conditions.

Kumagai et al.; "Feedstock Recovery through Co-pyrolysis of Wood Biomass/Waste Plastics Mixtures," Journal of Japan Society of Waste Recycling, Vol. 28, No. 1, pp. 4 - 12, 2017 reports the gas composition obtained by thermally decomposing wood biomass as (1) in Table 5 (C2 to C4 components assumed as C2 in here). At this time, in the case assuming that only methane and ethane generate as hydrocarbons, when supplementing the recycle gas (2) in the recycling step to the gas component (1) after pyrolysis, it was found that it is possible to adjust the concentration in the composition of (3) in Table 5, and possible to adjust the carbon mole ratio of hydrocarbon and carbon dioxide to the appropriate value comparable to the above Examples in Table 1.

According to the above, the above-mentioned embodiment and above Examples are applicable to various raw materials, for example, biogas obtained by methane fermenting organic waste such as livestock manure, a gas obtained by pyrolyzing or gasifying woody biomass and waste plastic, and the like can be exemplified.

**[Table 5]**

| | (1) Composition of biomass pyrolysis gas (excluding H₂ and CO) | | | | (2) Outlet component of recycling step (S30) | | | | | (3) Inlet gas of dry reforming step (S10) | | | | |
|---|---|---|---|---|---|---|---|---|---|---|---|---|---|---|
| | Composition (mole ratio) | | | Hydrocarbon / carbon dioxide (carbon mole ratio) | Composition (mole ratio) | | | | CO₂ mole concentration (%) | Composition (mole ratio) | | | | Hydrocarbon / carbon dioxide (carbon mole ratio) |
| | CO₂ | CH₄ | C2 | | CO₂ | CH₄ | C2 | CO | | CO₂ | CH₄ | C2 | CO | |
| Example 8 | 7 | 6 | 2 | 1.4 | 1 | 0 | 0 | 0 | 100 | 13 | 6 | 3 | 0 | 0.92 |
| Example 9 | 7 | 6 | 2 | 1.4 | 20 | 1 | 4 | 3 | 71 | 5 | 5 | 0 | 0 | 1.0 |

### EXPLANATION OF REFERENCE NUMERALS

1 useful hydrocarbon production device
2 dry reforming unit
3 useful hydrocarbon generating unit
4 recycling unit
5 hydrogen supplying unit

## Claims

1. A useful hydrocarbon production method comprising:
a dry reforming step of generating a first gas containing carbon monoxide and hydrogen, from a mixed gas containing a methane-containing hydrocarbon and carbon dioxide;
a useful hydrocarbon generating step of generating a second gas containing a useful hydrocarbon from the carbon monoxide and the hydrogen contained in the first gas; and
a recycling step of separating a carbon dioxide-containing gas from the second gas, and supplying the carbon dioxide-containing gas to the dry reforming step.

2. The useful hydrocarbon production method according to claim 1, wherein the recycling step adjusts a supplied amount of the carbon dioxide-containing gas supplied to the dry reforming step, in response to a ratio (M_{HC} / M_{CO2}) of total carbon mole number M_{HC} of hydrocarbons supplied to the dry reforming step relative to total carbon mole number M_{CO2} of carbon dioxide in the mixed gas and carbon dioxide in the carbon dioxide-containing gas supplied to the dry reforming step.

3. The useful hydrocarbon production method according to claim 1 or 2, wherein CO₂ concentration in the carbon dioxide-containing gas is 50% or more.

4. The useful hydrocarbon production method according to any one of claims 1 to 3, further comprising a hydrogen supplying step of separating hydrogen from the second gas and supplying hydrogen to the useful hydrocarbon generating step.

5. The useful hydrocarbon production method according to claim 4, wherein the hydrogen supplying step adjusts a supplied amount of hydrogen to be supplied to the useful hydrocarbon generating step in response to a mole number M_{H} of hydrogen in the useful hydrocarbon generating step.

6. The useful hydrocarbon production method according to any one of claims 1 to 5, further comprising an adjusting step of adjusting a mole ratio (M_{H}/M_{CO}) of mole number M_{H} of hydrogen relative to mole number M_{CO} of carbon monoxide contained in the first gas obtained in the dry reforming step.

7. The useful hydrocarbon production method according to any one of claims 1 to 6, further comprising a combusting step of separating a substance containing carbon atoms from the second gas, and combusting the substance containing carbon atoms to generate carbon dioxide,
wherein the recycling step supplies the carbon dioxide-containing gas and carbon dioxide generated in the combusting step to the dry reforming step.

8. The useful hydrocarbon production method according to any one of claims 1 to 7, wherein the useful hydrocarbon is at least one hydrocarbon selected from the group consisting of olefins, aromatic hydrocarbons, gasoline, liquefied petroleum gas and liquid hydrocarbons.

9. The useful hydrocarbon production method according to any one of claims 1 to 8, wherein the useful hydrocarbon is liquefied petroleum gas.

10. The useful hydrocarbon production method according to any one of claims 1 to 8, wherein the useful hydrocarbon is liquefied petroleum gas, and hydrocarbon having a carbon number other than 3 and 4 is contained in the carbon dioxide-containing gas.

11. The useful hydrocarbon production method according to any one of claims 1 to 8, wherein the useful hydrocarbon is olefin, and at least one of a hydrocarbon other than a target olefin and carbon monoxide is contained in the carbon dioxide-containing gas.

12. The useful hydrocarbon production method according to any one of claims 1 to 8, wherein the useful hydrocarbon is an aromatic hydrocarbon, and at least one of a hydrocarbon other than a target aromatic hydrocarbon and carbon monoxide is contained in the carbon dioxide-containing gas.

13. The useful hydrocarbon production method according to any one of claims 1 to 8, wherein the useful hydrocarbon is gasoline, and at least one of a hydrocarbon other than gasoline and carbon monoxide is contained in the carbon dioxide-containing gas.

14. The useful hydrocarbon production method according to any one of claims 1 to 8, wherein the useful hydrocarbon is a liquid hydrocarbon, and at least one of a hydrocarbon having a carbon number of 4 or less and carbon monoxide is contained in the carbon dioxide-containing gas.

15. A useful hydrocarbon production device comprising:
a dry reforming unit which generates a first gas containing carbon monoxide and hydrogen from a mixed gas containing a methane-containing hydrocarbon and carbon dioxide;
a useful hydrocarbon generating unit to which the first gas generated by the dry reforming unit is supplied, and which generates a second gas containing a useful hydrocarbon from the carbon monoxide and the hydrogen contained in the first gas; and
a recycling unit which separates a carbon dioxide-containing gas from the second gas generated by the useful hydrocarbon generating unit and supplies the carbon dioxide-containing gas to the dry reforming unit.

16. A useful hydrocarbon production method comprising:
a dry reforming step of generating a first gas containing carbon monoxide and hydrogen from a gas having methane/carbon dioxide ratio of 1 or more and 9 or less by mole conversion;
a useful hydrocarbon generating step of generating a second gas containing a useful hydrocarbon from the carbon monoxide and the hydrogen contained in the first gas; and
a recycling step of separating a carbon dioxide-containing gas from the second gas, and supplying the carbon dioxide-containing gas to the dry reforming step.
